(19) Europäisches Patentamt
European Patent Office
Office européen des brevets

(11) EP 4 733 726 A1

(12) # EUROPÄISCHE PATENTANMELDUNG

(43) Veröffentlichungstag:
**29.04.2026 Patentblatt 2026/18**

(21) Anmeldenummer: **25210118.3**

(22) Anmeldetag: **21.10.2025**

(51) Internationale Patentklassifikation (IPC):
***G01K 7/20*** *(2006.01)* ***G01K 7/24*** *(2006.01)*

(52) Gemeinsame Patentklassifikation (CPC):
**G01K 7/20; G01K 7/24**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH LA MA MD TN**

(30) Priorität: **22.10.2024 DE 102024210183**

(71) Anmelder: **ContiTech Deutschland GmbH**
**30175 Hannover (DE)**

(72) Erfinder:
- **Kneer, Janosch**
  **30419 Hannover (DE)**
- **Rösch, Simon**
  **30419 Hannover (DE)**
- **Schindelhauer, Tina**
  **30419 Hannover (DE)**
- **Kegel, Isabell**
  **30419 Hannover (DE)**

(74) Vertreter: **Preusser, Andrea**
**ContiTech Deutschland GmbH**
**Intellectual Property**
**Philipsbornstraße 1**
**30165 Hannover (DE)**

(54) **SENSOR, VORZUGSWEISE TEMPERATURSENSOR**

(57) Sensor (1) mit einer Temperaturmessbrücke (10) mit einem ersten ohmschen Widerstand (11), einem zweiten ohmschen Widerstand (12), einem dritten ohmschen Widerstand (13) und einem vierten ohmschen Widerstand (14), wobei der erste ohmsche Widerstand (11) und der zweite ohmsche Widerstand (12) in Reihe angeordnet sind und einen ersten Spannungsteiler (15) bilden, wobei der dritte ohmsche Widerstand (13) und der vierte ohmsche Widerstand (14) in Reihe angeordnet sind und einen zweiten Spannungsteiler (16) bilden, wobei die Temperaturmessbrücke (10) ausgebildet ist, so dass die Speisespannung ($U_D$) der Temperaturmessbrücke (10) zwischen dem ersten ohmschen Widerstand (11) und dem dritten ohmschen Widerstand (13) sowie zwischen dem zweiten ohmschen Widerstand (12) und dem vierten ohmschen Widerstand (14) anzulegen ist, und wobei die Brückenspannung ($U_D$) der Temperaturmessbrücke (10) zwischen dem ersten ohmschen Widerstand (11) und dem zweiten ohmschen Widerstand (12) sowie zwischen dem dritten ohmschen Widerstand (13) und dem vierten ohmschen Widerstand (14) anliegt, wobei der erste ohmsche Widerstand (11) und der vierte ohmsche Widerstand (14) den gleichen ohmschen Widerstandswert aufweisen, der zweite ohmsche Widerstand (12) und der dritte ohmsche Widerstand (13) den gleichen ohmschen Widerstandswert aufweisen, und alle vier ohmschen Widerstände (11, 12, 13, 14) gegenüber einer zu kompensierenden mechanischen Spannung zentriert angeordnet sind.

FIG 2

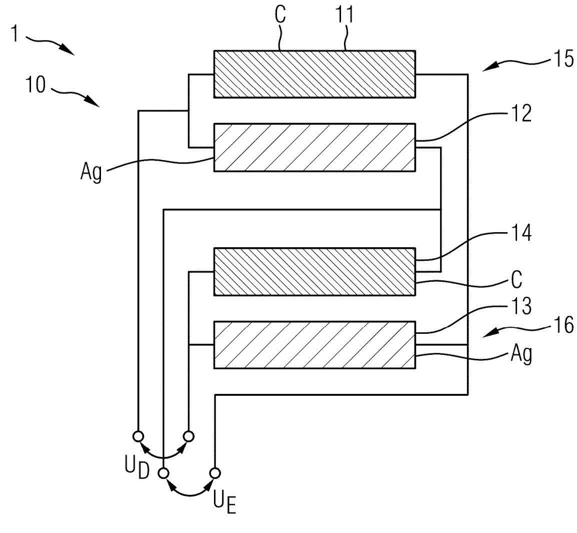


EP 4 733 726 A1

## Beschreibung

Die vorliegende Erfindung betrifft einen Sensor, vorzugsweise einen Temperatursensor.

Wheatstone'sche Brückenschaltungen sind gängige Verschaltungen resistiver Sensoren, um bereits kleine Effekte, d.h. kleine Widerstandsänderungen, zu detektieren und gleichzeitig ungewollte Messeffekte oder Störeinflüsse zu kompensieren. Dies kann beispielsweise die Temperaturkompensation in einem Dehnungsmessstreifen sein. Es ist aber ebenso möglich, die Temperatur als gewünschte Messgröße zu erfassen. Zur Messung verwendete Wheatstone'sche Brückenschaltungen können auch als Messbrücken bezeichnet werden.

Eine Wheatstone'sche Messbrücke, auch kurz Wheatstone-Brücke genannt, stellt eine Messeinrichtung zur Messung von elektrischen Widerständen ohmscher Art dar, welche kleine ohmsche Widerstandsänderungen erfassen kann. Die Wheatstonesche Messbrücke weist vier ohmsche Widerstände auf, welche zu einem geschlossenen Ring oder Quadrat zusammengeschaltet sind. Dabei ist eine Spannungsquelle in der einen Diagonalen der ohmschen Widerstände und ein Spannungsmessgerät in der anderen Diagonalen der ohmschen Widerstände angeordnet. Jeweils zwei Widerstände bilden somit einen Spannungsteiler, wobei beide Spannungsteiler zueinander parallel liegen. Das Spannungsmessgerät stellt zwischen diesen Spannungsteilern eine Querbeziehung her, welche der Schaltung den Namen Brückenschaltung gibt. Die unmittelbar gemessene Größe der Anordnung ist der Spannungsunterschied zwischen den Spannungsteilern, auch Diagonalspannung oder Brückenquerspannung genannt.

Eine heutzutage häufig genutzte Anwendung ist, die Wheatstone-Brücke mit einem Temperatur-Messwiderstand in einem der Spannungsteiler zu versehen, welcher sich bei einer Referenztemperatur im abgeglichenen Zustand befindet. Ändert sich die Temperatur am Messwiderstand, dann ändert sich die Diagonalspannung näherungsweise proportional zur Temperaturänderung. Derartige Schaltungen sind heutzutage auch mittels funktionalem Druck herstellbar.

Nachteilig ist jedoch, dass auf derartige Messbrücken auch andere störende Einflüsse wirken können. Derartige Störeinflüsse können Widerstandsänderungen sein, welche aufgrund mechanischer Krafteinwirkungen bzw. mechanischer Deformationen und bzw. oder aufgrund von Langzeit- bzw. Alterungseffekten in den eingesetzten Materialien auftreten können. Ein mechanischer Störeinfluss entspricht einer Widerstandsänderung aufgrund von Dehnung bzw. allgemein von Längenänderung in der Schaltung bzw. in dessen gedruckten Schichten.

Derartige Messbrücken können heutzutage durch Drucken hergestellt werden. Der Vorteil liegt in der besonders flachen Ausführung, was eine diskrete, nicht fühlbare Integration unter der Oberfläche ermöglichen kann. Insbesondere kann die gedrückte Messbrücke in der gleichen Dimension wie eine gedruckte Heizschicht, welche hinsichtlich ihrer Temperatur zu erfassen und zu regeln ist, ausgebildet werden, so dass diese die gleiche Höhe aufweisen können.

Gedruckte Temperatursensoren sind jedoch nicht besonders präzise. Das Signal kann neben der Temperatur stark von mechanischen Einflüssen überlagert werden. Außerdem können gedruckte Sensoren eine vergleichsweise hohe Drift aufweisen, da die gedruckten Materialschichten, üblicherweise als Polymermatrizen mit leitfähigen Partikeln ausgeführt, typischerweise schneller altern als Festkörper. In diesem Fall kann sich durch Änderungen in der gedruckten Schicht mit der Zeit der Widerstand und damit das Messsignal ändern. Gedruckte Temperatursensoren sind daher bis dato wenig verbreitet.

Eine Aufgabe der vorliegenden Erfindung ist es, eine Messbrücke zur Temperaturmessung der eingangs beschriebenen Art bereit zu stellen, so dass Störeinflüsse reduziert oder sogar vollständig kompensiert werden können. Dies soll insbesondere für Widerstandsänderungen erfolgen können. Dies soll insbesondere hinsichtlich mechanischer Deformationen und bzw. oder hinsichtlich Alterungseffekten in den eingesetzten Materialien erfolgen können. Die Messbrücke soll insbesondere als gedruckte Schaltung ausgebildet sein können. Zumindest soll eine Alternative zu den bekannten derartigen Messbrücke zur Temperaturmessung geschaffen werden können.

Die Aufgabe wird erfindungsgemäß durch einen Sensor mit den Merkmalen gemäß Patentanspruch 1 gelöst. Vorteilhafte Weiterbildungen sind in den Unteransprüchen beschrieben.

Somit betrifft die vorliegende Erfindung einen Sensor, vorzugsweise einen Temperatursensor, mit wenigstens einer ersten Wheatstone'schen Messbrücke als Temperaturmessbrücke, wobei die Temperaturmessbrücke aufweist:

- einen ersten ohmschen Widerstand,
- einen zweiten ohmschen Widerstand,
- einen dritten ohmschen Widerstand und
- einen vierten ohmschen Widerstand,

wobei der erste ohmsche Widerstand und der zweite ohmsche Widerstand in Reihe angeordnet sind und einen ersten Spannungsteiler bilden, wobei der dritte ohmsche Widerstand und der vierte ohmsche Widerstand in Reihe angeordnet sind und einen zweiten Spannungsteiler bilden, wobei die Temperaturmessbrücke ausgebildet ist, so dass die Speisespannung der Temperaturmessbrücke zwischen dem ersten ohmschen Widerstand und dem dritten ohmschen Widerstand sowie zwischen dem zweiten ohmschen Widerstand und dem vierten ohmschen Widerstand anzulegen ist, und wobei die Brückenspannung der Temperaturmessbrücke zwischen dem ersten ohmschen Widerstand und dem zweiten ohmschen Widerstand sowie zwischen dem dritten ohmschen Widerstand und dem vierten ohmschen Widerstand anliegt.

Dies stellt eine übliche und bekannte Wheatstone'schen Messbrücke dar, welche zur sensorischen Erfassung einer Temperatur als Temperaturmessbrücke verwendet werden und somit Bestandteil eines Sensors bzw. eines Temperatursensors sein kann.

Da derartige Sensoren bzw. Temperatursensoren Störeinflüsse wie ohmschen Widerstandsänderungen aufgrund mechanischer Deformationen unterliegen können, welche das Messergebnis beeinflussen und damit zur Erfassung einer ungenaueren bzw. unkorrekten Temperatur führen können, ist der erfindungsgemäße Sensor bzw. dessen Temperaturmessbrücke dadurch gekennzeichnet, dass der erste ohmsche Widerstand und der vierte ohmsche Widerstand den gleichen ohmschen Widerstandswert aufweisen, der zweite ohmsche Widerstand und der dritte ohmsche Widerstand den gleichen ohmschen Widerstandswert aufweisen, und alle vier ohmschen Widerstände gegenüber einer zu kompensierenden mechanischen Spannung zentriert angeordnet sind.

Hierdurch kann eine Kompensation der mechanischen Spannung bzw. einer hieraus resultierenden Dehnung bzw. allgemein Längenänderung erfolgen, so dass die Messung hiervon unbeeinflusst bleiben kann.

Gemäß einem Aspekt der Erfindung weisen der erste ohmsche Widerstand und der vierte ohmsche Widerstand ein erstes Material auf, vorzugsweise bestehen aus dem ersten Material, der zweite ohmsche Widerstand und der dritte ohmsche Widerstand weisen ein zweites Material auf, vorzugsweise bestehen aus dem zweiten Material, und alle vier ohmschen Widerstände weisen symmetrisch zueinander die gleiche Geometrie auf.

Dies kann eine konkrete Möglichkeit der Umsetzung darstellen.

Gemäß einem weiteren Aspekt der Erfindung sind alle vier ohmschen Widerstände sich parallel zueinander erstreckend und nebeneinander angeordnet ausgebildet.

Dies kann eine konkrete Möglichkeit der Umsetzung darstellen.

Gemäß einem weiteren Aspekt der Erfindung sind der erste ohmsche Widerstand und der dritte ohmsche Widerstand entlang ihrer länglichen Erstreckungsrichtung hintereinander angeordnet, der zweite ohmsche Widerstand und der vierte ohmsche Widerstand sind sich parallel zueinander erstreckend angeordnet und der erste ohmsche Widerstand und der dritte ohmsche Widerstand sind rechtwinkelig zum zweiten ohmschen Widerstand und zum vierten ohmschen Widerstand angeordnet.

Dies kann eine konkrete alternative Möglichkeit der Umsetzung darstellen.

Gemäß einem weiteren Aspekt der Erfindung ist das erste Material Carbon und das zweite Material Silber.

Dies kann eine konkrete Möglichkeit der Umsetzung darstellen.

Gemäß einem weiteren Aspekt der Erfindung ist das erste Material Carbon und das zweite Material ein elektrisch leitfähiger Polymer.

Dies kann eine konkrete alternative Möglichkeit der Umsetzung darstellen.

Gemäß einem weiteren Aspekt der Erfindung sind wenigstens die vier Widerstände, vorzugsweise ist die Temperaturmessbrücke, gedruckt.

Dies kann eine konkrete Möglichkeit der Umsetzung darstellen.

Gemäß einem weiteren Aspekt der Erfindung weisen die Druckfarben der vier ohmschen Widerstände eine gleichartige Basiskomponente auf.

Die Drift der gedruckten Sensoren, also parasitäre Widerstands- und damit Signaländerung aufgrund von Alterung in den gedruckten Schichten, kann durch Verwendung der gleichartigen Basiskomponenten in den eingesetzten Druckfarben ("Systemtreue"-Ansatz) reduziert oder kompensiert werden. Die gedruckten Sensorschichten in der Messbrücke altern gleichermaßen, die Signaländerung aufgrund Alterung ist entsprechend in gleicher Größe und wird in der Messbrücke kompensiert. Eine Temperaturänderung hingegen erzeugt die gewünschte Signaländerung aufgrund verschiedener Temperatur-Koeffizienten der verwendeten Materialien. Zugrundeliegende Gegebenheit ist, dass die Alterung primär durch die Bindemittel bzw. die Polymermatrizes, bzw. allgemein in den organischen Anteilen der Schicht entsteht. Wählt man für die eingebetteten leitfähigen Partikel z.B. Silber und Carbon sind diese verhältnismäßig dazu sehr stabil (konkrete vorteilhaften Ausgestaltung der Materialkombination.

Ein grundlegender Vorteil der Prozessierung kann darin gesehen werden, dass die funktionalen Druckfarben mit Silber- bzw. Carbonpartikeln auch verwendet werden, um eine zu überwachende, gedruckte Heizschicht zu realisieren. Für die Sensorschicht kommen also dieselben Materialien zum Einsatz, was die Herstellung deutlich vereinfacht (gleiche Substrate möglich, gleiche Druckformen, kein Farbwechsel, gleiches Druckwerk kann verwendet werden, gleiche Trocknungs- und Kaschierprozesse, gleiche Qualifizierungsroutinen).

Gemäß einem weiteren Aspekt der Erfindung weist der Sensor eine Mehrzahl von Temperaturmessbrücken auf, welche unterschiedlich groß dimensioniert und parallel zueinander angeordnet sind.

Dies kann es ermöglichen, die zuvor beschriebenen Eigenschaften und Vorteile einer Temperaturmessbrücke bei einem Sensor bzw. bei einem Temperatursensor mehrfach und insbesondere mit unterschiedlichen Empfindlichkeiten, insbesondere für unterschiedliche Temperaturbereiche, zu nutzen.

Mehrere Ausführungsbeispiel und weitere Vorteile der Erfindung werden nachstehend im Zusammenhang mit den folgenden Figuren erläutert. Darin zeigt:

| | |
|---|---|
| Figur 1 | eine schematische allgemeine Darstellung einer Wheatstone'sche Messbrücke; |
| Figur 2 | ein erfindungsgemäßer Temperatursensor mit einer Temperaturmessbrücke gemäß eines ersten Ausführungsbeispiels; |
| Figur 3 | ein erfindungsgemäßer Temperatursensor mit einer Temperaturmessbrücke gemäß eines zweiten Ausführungsbeispiels; |
| Figur 4 | ein erfindungsgemäßer Temperatursensor mit einer Temperaturmessbrücke gemäß eines dritten Ausführungsbeispiels; |
| Figur 5 | ein Messdiagramm der Messspannungsänderung bzw. der Brückenspannungsänderung bei Temperaturänderung für die Materialkombination der Temperaturmessbrücken des ersten bis dritten Ausführungsbeispiels; |
| Figur 6 | eine Umsetzung der ohmschen Widerstände mit unterschiedlichen Materialien zur Erzielung eines Beitragsverhältnis von X = 1; |
| Figur 7 | eine Umsetzung der ohmschen Widerstände mit unterschiedlichen Materialien zur Erzielung eines Beitragsverhältnis von X = 0,1; |
| Figur 8 | ein Diagramm der berechneten Empfindlichkeit für die Umsetzung der ohmschen Widerstände mit unterschiedlichen Materialien; |
| Figur 9 | ein Diagramm des berechneten Alterungseffekts; |
| Figur 10 | ein erfindungsgemäßer Temperatursensor mit mehreren Temperaturmessbrücken gemäß eines vierten Ausführungsbeispiels; |
| Figur 11 | ein erfindungsgemäßer Temperatursensor mit mehreren Temperaturmessbrücken gemäß eines fünften Ausführungsbeispiels; und |
| Figur 12 | ein Messdiagramm der Empfindlichkeiten der Temperatursensoren gemäß des vierten und fünften Ausführungsbeispiels der Figuren 10 und 11. |

Die allgemeinen Gleichungen Gl. 1 und Gl. 2 einer Wheatstone'sche Messbrücke 10, vgl. Figur 1, welche als Temperaturmessbrücke 10 verwendet werden kann, lauten:

$$U_D = U_E * \left(\frac{R_2}{R_1+R_2} - \frac{R_4}{R_3+R_4}\right) \quad \textbf{(Gl. 1}$$

Mit $R_1 = R_4 = R_C$ und $R_2 = R_3 = R_{Ag}$

$$U_D = U_E * \frac{R_{Ag} - R_c}{R_{Ag} + R_c} \qquad \textbf{(Gl. 2)}$$

Gemäß eines ersten bis dritten Ausführungsbeispiels der vorliegenden Erfindung weisen der erste ohmsche Widerstand 11 und der vierte ohmsche Widerstand 14 den gleichen ohmschen Widerstandswert auf. Ebenso weisen der zweite ohmsche Widerstand 12 und der dritte ohmsche Widerstand 13 den gleichen ohmschen Widerstandswert auf. Alle vier ohmschen Widerstände 11, 12, 13, 14 sind gegenüber einer zu kompensierenden mechanischen Spannung zentriert angeordnet.

Konkret besehen der erste ohmsche Widerstand 11 und der vierte ohmsche Widerstand 14 aus dem ersten Material und der zweite ohmsche Widerstand 12 und der dritte ohmsche Widerstand 13 bestehen aus dem zweiten Material. Alle vier ohmschen Widerstände 11, 12, 13, 14 weisen symmetrisch zueinander die gleiche Geometrie auf. Dies kann zu einer Kompensation von Störeinflüssen führen, welche aus mechanischen Spannungen und somit aus Längenänderungen bzw. Dehnungen resultieren können.

Gemäß des ersten Ausführungsbeispiels der Figur 2 und des zweiten Ausführungsbeispiels der Figur 3 sind alle vier ohmschen Widerstände 11, 12, 13, 14 sich parallel zueinander erstreckend und nebeneinander angeordnet ausgebildet. Die beiden Ausführungsbeispiele unterschieden sich lediglich durch die Anordnung der elektrischen Kontakte, um die Speisespannung $U_0$ anzulegen und um die Brückenspannung $U_D$ abzugreifen.

Gemäß des dritten Ausführungsbeispiels der Figur 4 sind der erste ohmsche Widerstand 11 und der dritte ohmsche Widerstand 13 entlang ihrer länglichen Erstreckungsrichtung hintereinander angeordnet, wobei der zweite ohmsche Widerstand 12 und der vierte ohmsche Widerstand 14 sich parallel zueinander erstreckend angeordnet sind und wobei der erste ohmsche Widerstand 11 und der dritte ohmsche Widerstand 13 rechtwinkelig zum zweiten ohmschen Widerstand 12 und zum vierten ohmschen Widerstand 14 angeordnet sind.

In jedem Fall kann die gedruckte Temperaturmessbrücke 10 aus zwei gedruckten ohmschen Carbonschicht-Widerständen $R_{S,\,C}$ mit dem ohmschen Widerstands Rc als erster ohmscher Widerstand 11 und als vierter ohmscher Widerstand 14 sowie aus zwei gedruckten ohmschen Silberschicht-Widerständen $R_{S,\,Ag}$ mit dem ohmschen Widerstands $R_{Ag}$ als zweiter ohmscher Widerstand 12 und als dritter ohmscher Widerstand 13 bestehen.

In jedem Fall zeigen beide Materialien eine näherungsweise gut lineare Messspannungsänderung bzw. der Brückenspannungsänderung bei Temperaturänderung bzw. über die Temperatur aufgetragen, vgl. errechnete Kennlinie der Figur 5.

Silber und Carbon haben jedoch unterschiedliche Widerstands-Temperaturkoeffizienten $TCR_{Ag}$, $TCR_C$, d.h. konkret nimmt bei Temperaturanstieg der ohmsche Widerstand Rc einer gedruckten Carbonschicht stärker zu als der ohmsche Widerstand $R_{Ag}$ einer gedruckten Silberschicht.

In einer beispielshaften ersten Ausführung (Carbon Type PE672), welche auf das erste bis dritte Ausführungsbeispiel der Figuren 2 bis 4 angewendet werden kann, hat die gedruckte Carbonschicht einen Temperaturkoeffizienten von $TCR_C$ = 7,5E-3 Ohm/K und die gedruckte Silberschicht hat einen Temperaturkoeffizienten von $TCR_{Ag}$ = 2,5E-3 Ohm/K. Hieraus ergibt sich ein Faktor 3 als Unterschied der beiden Temperaturkoeffizienten.

in einer beispielhaften zweiten Ausführung 2 (Carbon Type PE671), welche ebenfalls auf das erste bis dritte Ausführungsbeispiel der Figuren 2 bis 4 angewendet werden kann, hat die gedruckte Carbonschicht einen Temperaturkoeffizienten von TCRc =15E-3 Ohm/K. In diesem Fall ergibt sich ein Faktor 6 als Unterschied der beiden Temperaturkoeffizienten, was der zu erreichenden Brückenspannung $U_D$ und damit der erreichbaren Empfindlichkeit zuträglich ist, siehe Gleichung Gl. 3 wie folgt:

Einsetzen der Temperaturabhängigkeit

$$R(T) = R_0 * (1 + TCR * \Delta T) \text{ und } R_{Ag,0} = x * R_{c,0} = x * R_0$$

$$U_D = U_E * \frac{\left(x-1+\Delta T*\left(x*TCR_{Ag}-TCR_c\right)\right)}{\left(x+1+\Delta T*\left(x*TCR_{Ag}+TCR_c\right)\right)} \qquad \textbf{(Gl. 3)}$$

Zu beachten ist jedoch der deutlichere Unterschied in der generellen spezifischen Leitfähigkeit. In einer beispielhaften Ausführung hat Carbon einen ohmschen Schichtwiderstand $R_{S,\,C}$ = 970 Ohm/sq und einen ohmschen Schichtwiderstand $R_{S,\,Ag}$ = 0.04 Ohm/sq.

Mit den genannten Werten und einem ausgeglichenen Beitragsverhältnis (X = 1, Gl. 3) lässt sich eine maximale Empfindlichkeit der Temperaturmessbrücke 10 von -8,9 mV/°C in einfacher linearer Näherung erreichen, siehe Figur 5 (Annahme Betriebsspannung 5V).

Ein Beitragsverhältnis von X = 1 ist aufgrund der gegebenen, stark unterschiedlichen spezifischen Leitfähigkeiten im Bereich von vier Größenordnungen aufgrund der resultierenden Größe der gedruckten Strukturen technisch schwierig realisierbar, vgl. Figur 6. In der Realisierung besser denkbar ist ein Beitragsverhältnis von X = 0,1, vgl. Figur 7. Dies resultiert jedoch in einer reduzierten erreichbaren Empfindlichkeit von $TCV_{0,1}$ = 2, 8mV/°C, vgl. Figur 8.

Bei der betrachteten vorteilhaften Ausführung besitzen die Carbonschicht C und die Silberschicht Ag ähnliche oder gleiche Bindemittel und Additive. Somit können gleichartige Alterungsfaktoren ($k_{Ag}$, $k_C$) angenommen werden. Bei einer Brückenschaltung 10 hängt die Messspannung nur von dem Beitragsverhältnis der Widerstände $R_{Ag}$, Rc und nicht von deren einzelnen Widerstandswerten ab. Wenn sich also beide Widerstände $R_{Ag}$, Rc um den gleichen Faktor durch Alterung erhöhen, was aufgrund der ähnlichen Beschaffenheit zu erwarten ist, bleibt das Beitragsverhältnis X über die Zeit konstant und die Empfindlichkeit und damit die Sensoreigenschaft bleibt gleich.

Die Sensorschichten können zu einem gewissen Grad auch unterschiedlich altern ($k_{Ag} \neq k_C$ -> $X \neq X_0$). In einer beispielhaft betrachteten Auslegung mit $X_0$ = 1 kann $X_t$ im Bereich 0,8...1,8 liegen, ohne signifikante Änderung der Empfindlichkeit, vgl. Figur 9. Somit entspricht das Beitragsverhältnis der Widerstände Xt zu einem Zeitpunkt t nicht dem ursprünglichen Verhältnis X0 und dennoch ergibt sich keine signifikante Änderung der Empfindlichkeit. In einem beispielhaft betrachteten Interval des Beitragsverhältnisses X von 0,8-1,8 ändert sich die Brückenempflindlichkeit dennoch nur < 0,05 (<5%), d.h. in der Darstellung der Figur 9 von maximal 9mV/°C auf 8,6mV/°C bei Xt = 0,8 oder 1,8.

Als eine alternative Materialkombination, insbesondere vorteilhafterweise im Sinne der Dimensionierung sowie der Empfindlichkeit des Sensors, kann die Verwendung von Carbon in Kombination mit einem leitfähigen Polymer als Sensorschichten bzw. als Sensorelemente erfolgen. Es wird sich zu Nutze gemacht, dass das leitfähige Polymer eine NTC-Charakteristik aufweist.

Das leitfähige Polymer ist in einer beispielhaften vorteilhaften Ausführung nicht weiter vorbehandelt oder präpariert und hat einen Flächenwiderstand von 328 Ohm/sq. Somit kann das vorteilhafte Beitragsverhältnis von X = 1, vgl. Gl. 3, mit Carbon mit einem Flächenwiderstand von 1.240 Ohm/sq wesentlich leichter erreicht werden als mit Silber.

Damit sind Sensoren mit einer Fläche von unter 1cm^2 denkbar, vgl. das vierte und fünfte Ausführungsbeispiel der Figuren 10 und 11.

Über die geometrischen Vorteile hinaus, handelt es sich, wie beschrieben, beim leitfähigen Polymer um einen Warmleiter, dessen ohmscher Widerstand also mit steigender Temperatur abnimmt, was zusammen mit dem Einsatz von Carbon als Kaltleiter eine erhöhte Empfindlichkeit der resultierenden Temperaturmessbrücke 10 zur Folge hat. Der Temperaturkoeffizient des leitfähigen Polymers ist dabei allerdings verhältnismäßig klein. Dennoch lassen sich in dieser Ausführung Empfindlichkeiten von ~14 mV/°C erreichen, vgl. Figur 12. Die Materialkombination begünstigt dabei variables Design und Dimensionierung bei gleichbleibender Empfindlichkeit, wie die Darstellung der Empfindlichkeit der Figur 12 für die beiden Auslegungsvarianten der Figuren 10 und 11 demonstriert.

In der beispielhaften Ausführung sind die Sensorstrukturen mittels Siebdruck hergestellt, was eine höhere Prozessgeschwindikeit erlaubt ein Inkjet-Verfahren. Des Weiteren lassen sich damit Schichten mit höherem Partikelgehalt und damit besseren elektrischen Grundeigenschaften erzielen.

**Bezugszeichenliste (Teil der Beschreibung)**

| | |
|---|---|
| Ag | Silberschicht |
| C | Carbonschicht |
| $k_{Ag}$ | Alterungsfaktor Silber |
| $k_C$ | Alterungsfaktor Carbon |
| $R_{Ag}$ | ohmscher Widerstand von Silber |
| $R_C$ | ohmscher Widerstand von Carbon |
| $R_{S, Ag}$ | ohmscher Silberschicht-Widerstand |
| $R_{S, C}$ | ohmscher Carbonschicht-Widerstand |
| $TCR_{Ag}$ | Widerstands-Temperaturkoeffizient der Silberschicht Ag |
| $TCR_c$ | Widerstands-Temperaturkoeffizient der Carbonschicht C |
| $U_E$ | Speisespannung |
| $U_D$ | Brückenspannung |
| X | Beitragsverhältnis zwischen Speisespannung $U_E$ und Brückenspannung $U_D$ |

| | |
|---|---|
| 1 | (gedruckter) Sensor; (gedruckter) Temperatursensor |
| 10 | Wheatstone'sche Messbrücke; Brückenschaltung; Temperaturmessbrücke |
| 11 | erster ohmscher Widerstand der Wheatstone'schen Messbrücke |
| 12 | zweiter ohmscher Widerstand der Wheatstone'schen Messbrücke |
| 13 | dritter ohmscher Widerstand der Wheatstone'schen Messbrücke |
| 14 | vierter ohmscher Widerstand der Wheatstone'schen Messbrücke |
| 15 | erster Spannungsteiler der Wheatstone'schen Messbrücke |
| 16 | zweiter Spannungsteiler der Wheatstone'schen Messbrücke |

**Patentansprüche**

**1.** Sensor (1), vorzugsweise Temperatursensor (1),

mit wenigstens einer ersten Wheatstone'schen Messbrücke (10) als Temperaturmessbrücke (10), wobei die Temperaturmessbrücke (10) aufweist:

- einen ersten ohmschen Widerstand (11),
- einen zweiten ohmschen Widerstand (12),
- einen dritten ohmschen Widerstand (13) und
- einen vierten ohmschen Widerstand (14),

wobei der erste ohmsche Widerstand (11) und der zweite ohmsche Widerstand (12) in Reihe angeordnet sind und einen ersten Spannungsteiler (15) bilden,
wobei der dritte ohmsche Widerstand (13) und der vierte ohmsche Widerstand (14) in Reihe angeordnet sind und einen zweiten Spannungsteiler (16) bilden,
wobei die Temperaturmessbrücke (10) ausgebildet ist, so dass die Speisespannung ($U_D$) der Temperaturmessbrücke (10) zwischen dem ersten ohmschen Widerstand (11) und dem dritten ohmschen Widerstand (13) sowie zwischen dem zweiten ohmschen Widerstand (12) und dem vierten ohmschen Widerstand (14) anzulegen ist, und
wobei die Brückenspannung ($U_D$) der Temperaturmessbrücke (10) zwischen dem ersten ohmschen Widerstand (11) und dem zweiten ohmschen Widerstand (12) sowie zwischen dem dritten ohmschen Widerstand (13) und dem vierten ohmschen Widerstand (14) anliegt,
**dadurch gekennzeichnet, dass**
der erste ohmsche Widerstand (11) und der vierte ohmsche Widerstand (14) den gleichen ohmschen Widerstandswert aufweisen,
der zweite ohmsche Widerstand (12) und der dritte ohmsche Widerstand (13) den gleichen ohmschen Widerstandswert aufweisen, und
alle vier ohmschen Widerstände (11, 12, 13, 14) gegenüber einer zu kompensierenden mechanischen Spannung zentriert angeordnet sind.

**2.** Sensor (1) nach Anspruch 1,

wobei der erste ohmsche Widerstand (11) und der vierte ohmsche Widerstand (14) ein erstes Material aufweisen, vorzugsweise aus dem ersten Material bestehen,
wobei der zweite ohmsche Widerstand (12) und der dritte ohmsche Widerstand (13) ein zweites Material aufweisen, vorzugsweise aus dem zweiten Material bestehen, und
wobei alle vier ohmschen Widerstände (11, 12, 13, 14) symmetrisch zueinander die gleiche Geometrie aufweisen.

**3.** Sensor (1) nach Anspruch 2,
wobei alle vier ohmschen Widerstände (11, 12, 13, 14) sich parallel zueinander erstreckend und nebeneinander angeordnet ausgebildet sind.

**4.** Sensor (1) nach Anspruch 2,

wobei der erste ohmsche Widerstand (11) und der dritte ohmsche Widerstand (13) entlang ihrer länglichen Erstreckungsrichtung hintereinander angeordnet sind,
wobei der zweite ohmsche Widerstand (12) und der vierte ohmsche Widerstand (14) sich parallel zueinander erstreckend angeordnet sind und
wobei der erste ohmsche Widerstand (11) und der dritte ohmsche Widerstand (13) rechtwinkelig zum zweiten ohmschen Widerstand (12) und zum vierten ohmschen Widerstand (14) angeordnet sind.

**5.** Sensor (1) nach einem der Ansprüche 2 bis 4,
wobei das erste Material Carbon und das zweite Material Silber ist.

**6.** Sensor (1) nach einem der Ansprüche 2 bis 4,
wobei das erste Material Carbon und das zweite Material ein elektrisch leitfähiger Polymer ist.

**7.** Sensor (1) nach einem der vorangehenden Ansprüche,
wobei wenigstens die vier Widerstände (11, 12, 13, 14), vorzugsweise die Temperaturmessbrücke (10), gedruckt sind.

**8.** Sensor (1) nach Anspruch 7,
wobei die Druckfarben der vier ohmschen Widerstände (11, 12, 13, 14) eine gleichartige Basiskomponente aufweisen.

**9.** Sensor (1) nach einem der vorangehenden Ansprüche,
mit einer Mehrzahl von Temperaturmessbrücken (10), welche unterschiedlich groß dimensioniert und parallel zueinander angeordnet sind.

FIG 1

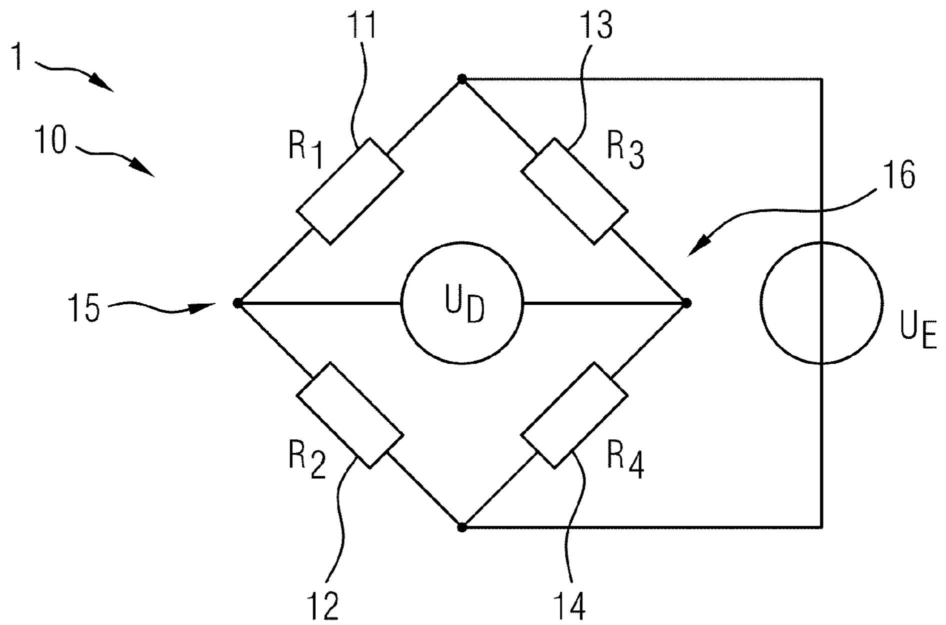
1
10
11
13
$R_1$
$R_3$
16
15
$U_D$
$U_E$
$R_2$
$R_4$
12
14

FIG 2

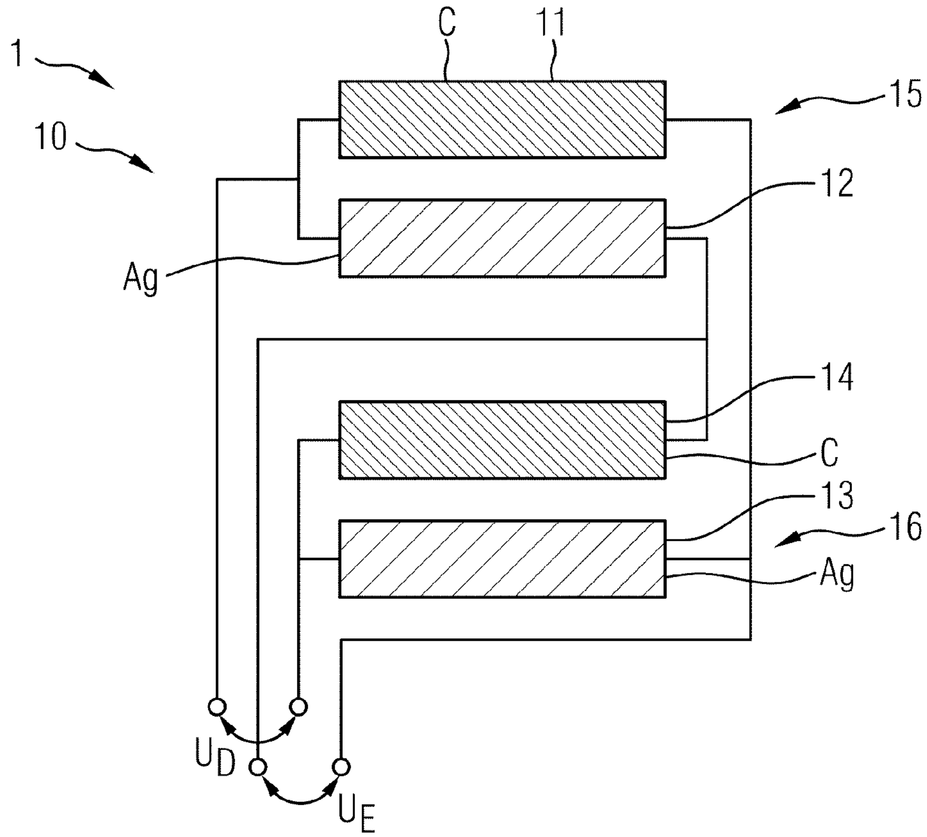
1
10
C
11
15
12
Ag
14
C
13
16
Ag
$U_D$
$U_E$

FIG 3

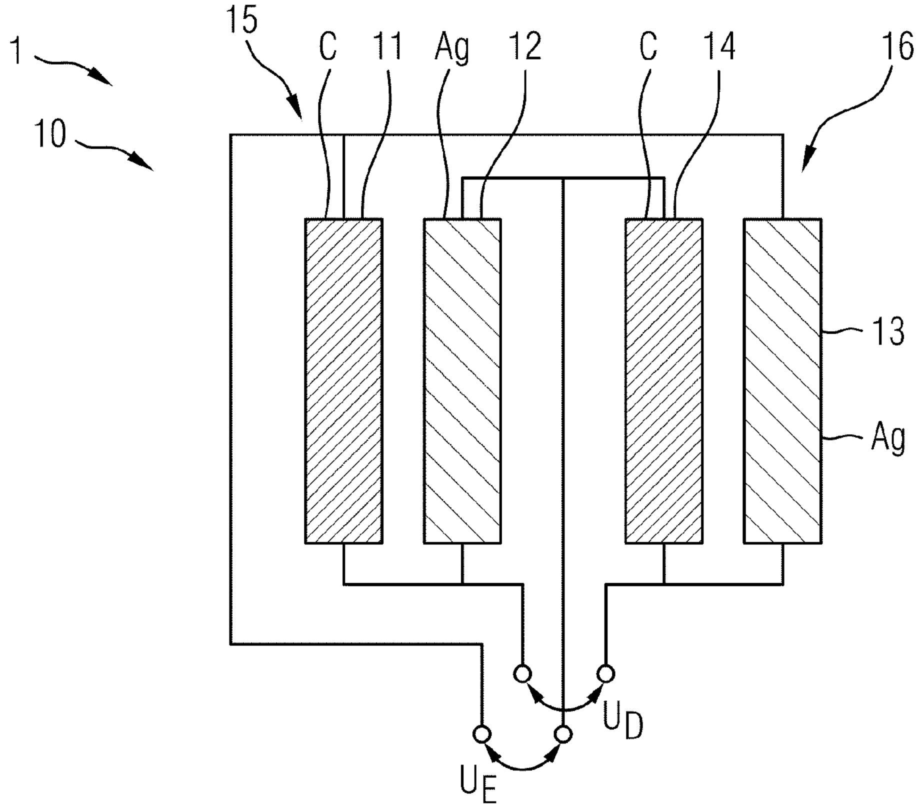
1
10
15
C
11
Ag
12
C
14
16
13
Ag
$U_D$
$U_E$

FIG 4

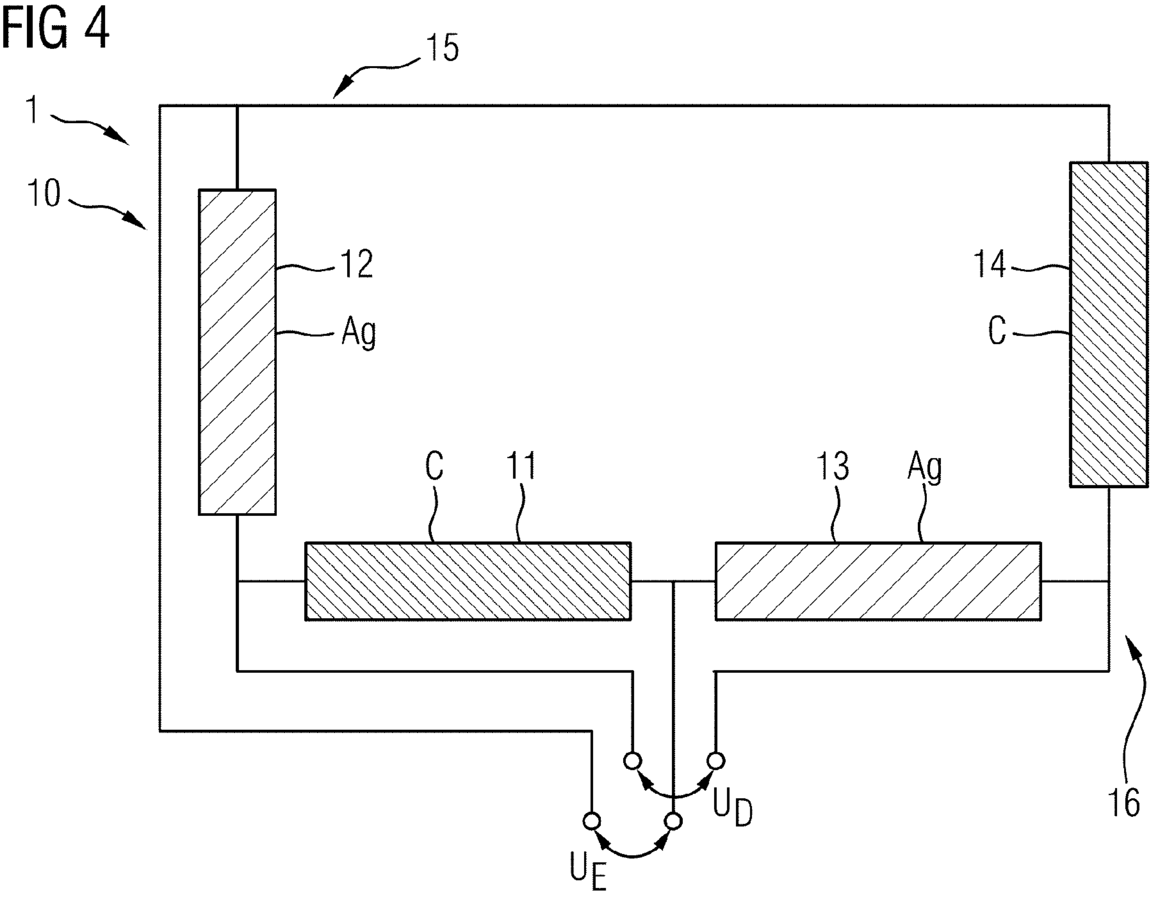
15
1
10
12
Ag
14
C
C
11
13
Ag
$U_D$
$U_E$
16

FIG 5

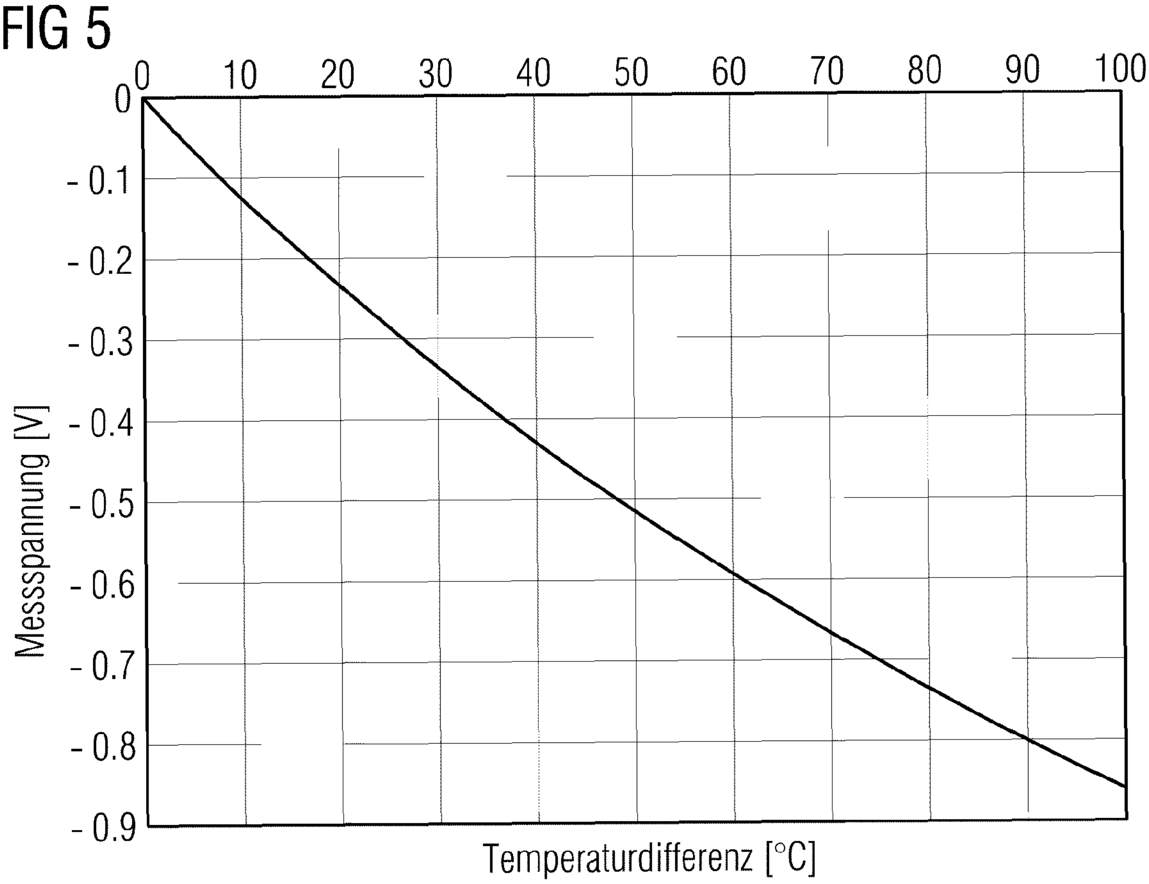
0
10
20
30
40
50
60
70
80
90
100
0
- 0.1
- 0.2
- 0.3
- 0.4
- 0.5
- 0.6
- 0.7
- 0.8
- 0.9
Messspannung [V]
Temperaturdifferenz [°C]

FIG 6

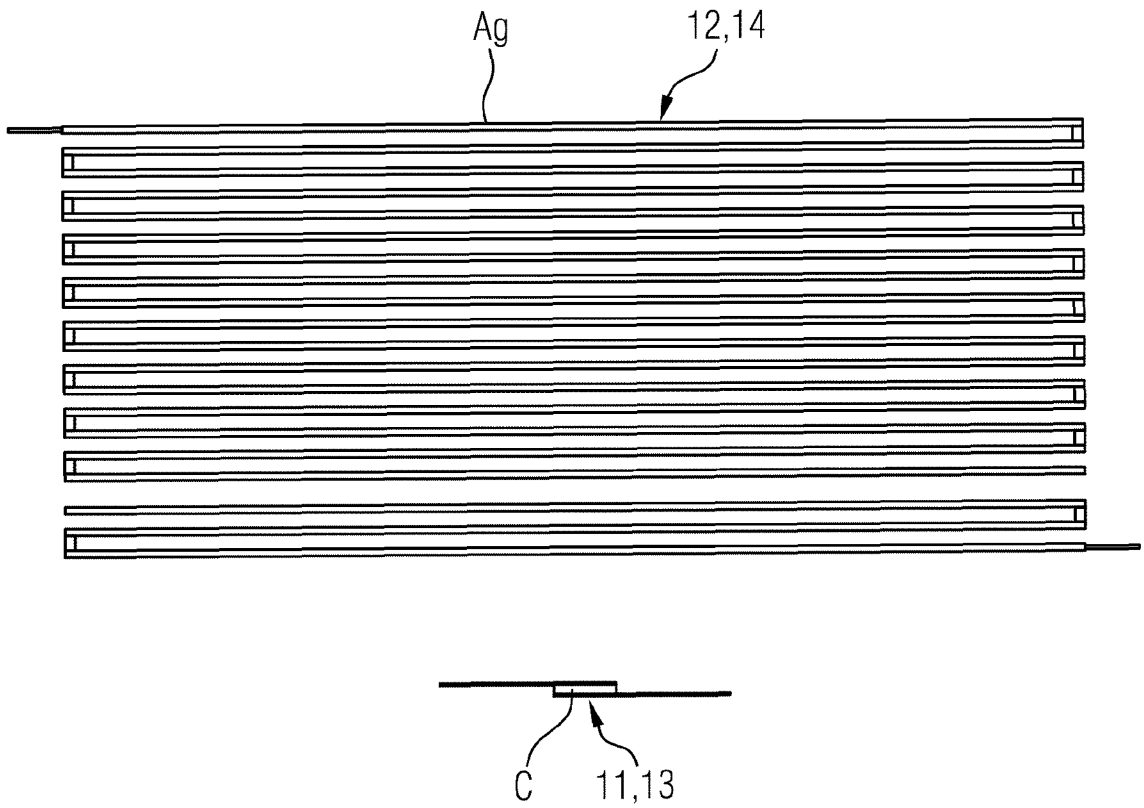
Ag
12,14
C
11,13

FIG 7

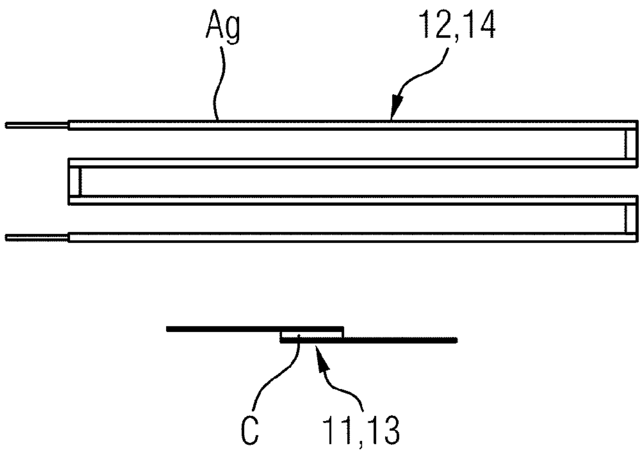
Ag
12,14
C
11,13

FIG 8

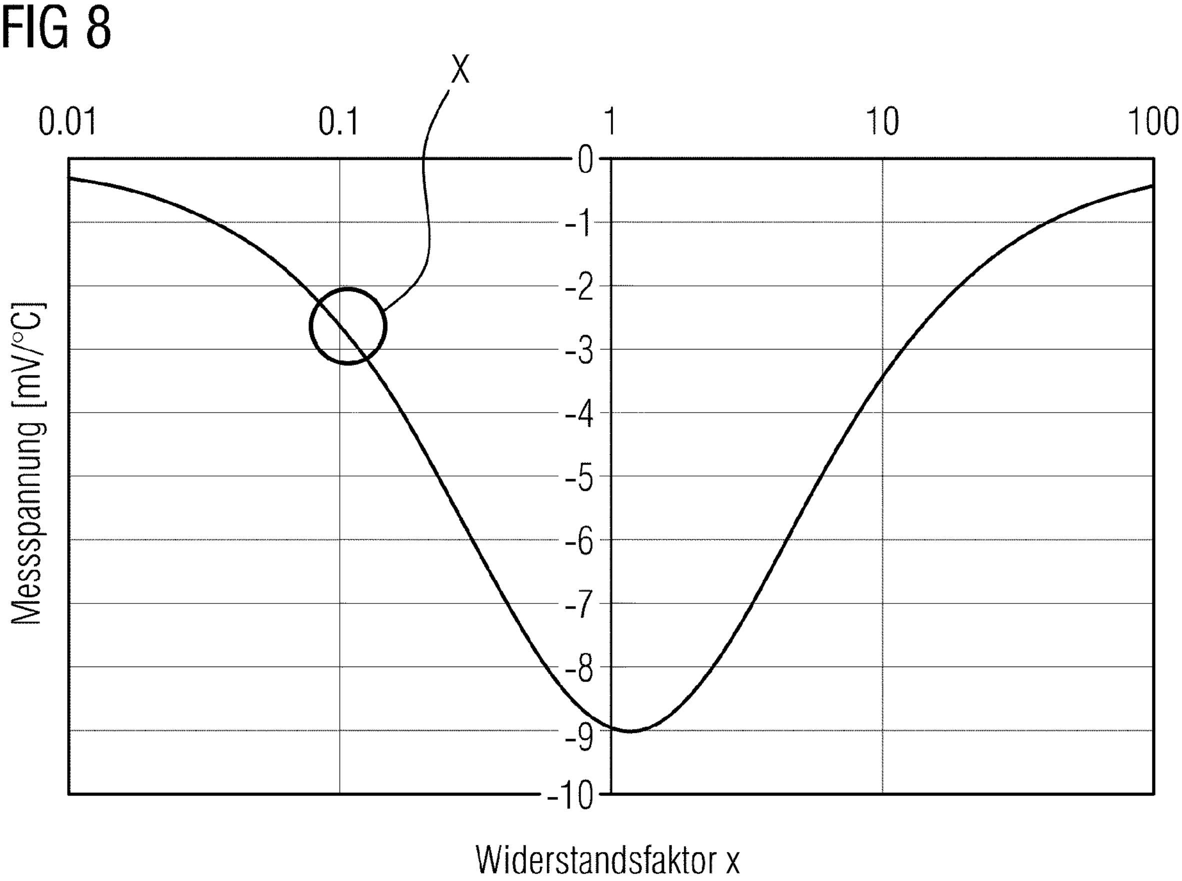
X
0.01
0.1
1
10
100
0
-1
-2
-3
-4
-5
-6
-7
-8
-9
-10
Messspannung [mV/°C]
Widerstandsfaktor x

FIG 9

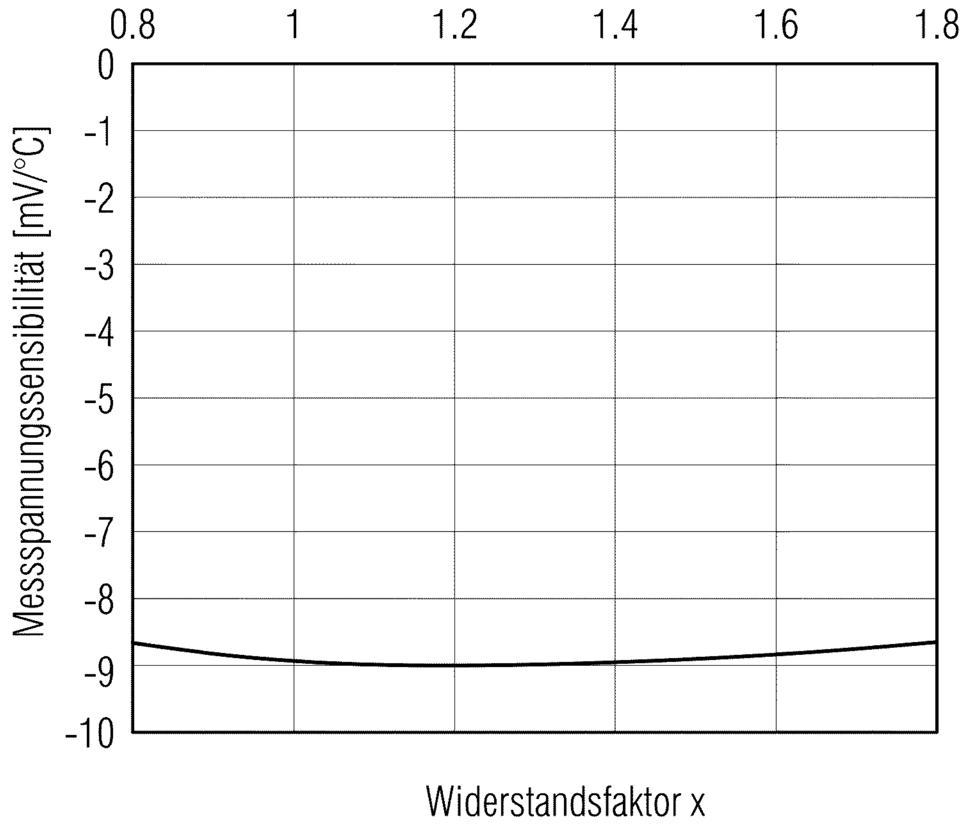
0.8
1
1.2
1.4
1.6
1.8
0
-1
-2
-3
-4
-5
-6
-7
-8
-9
-10
Messspannungssensibilität [mV/°C]
Widerstandsfaktor x

FIG 10

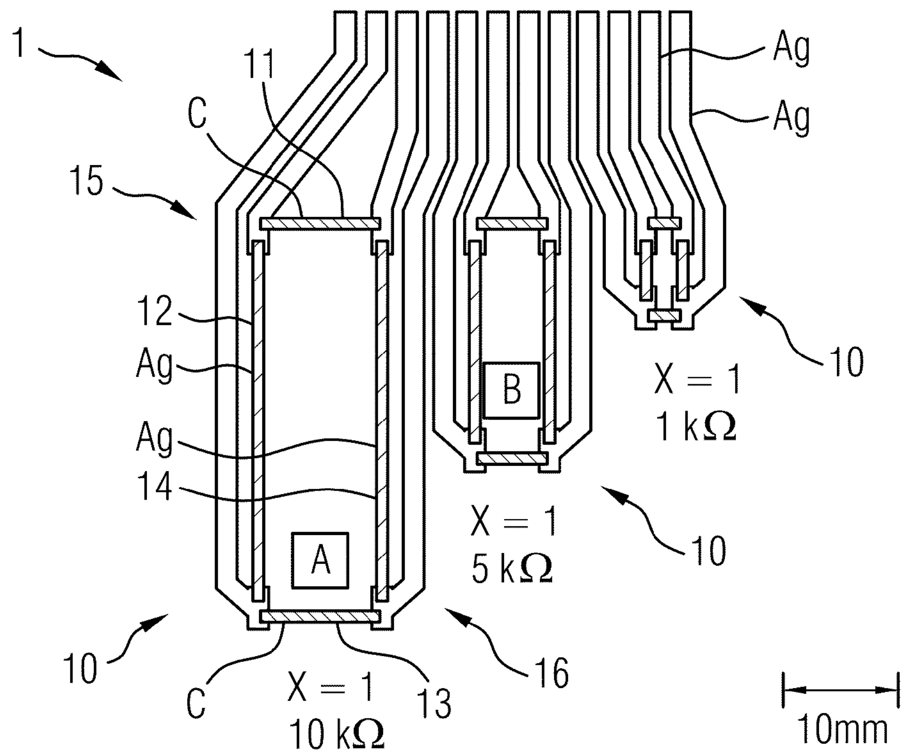
1
11
C
15
Ag
Ag
12
Ag
Ag
14
A
B
X = 1
1 kΩ
10
X = 1
5 kΩ
10
10
C
X = 1
10 kΩ
13
16
10mm

FIG 11

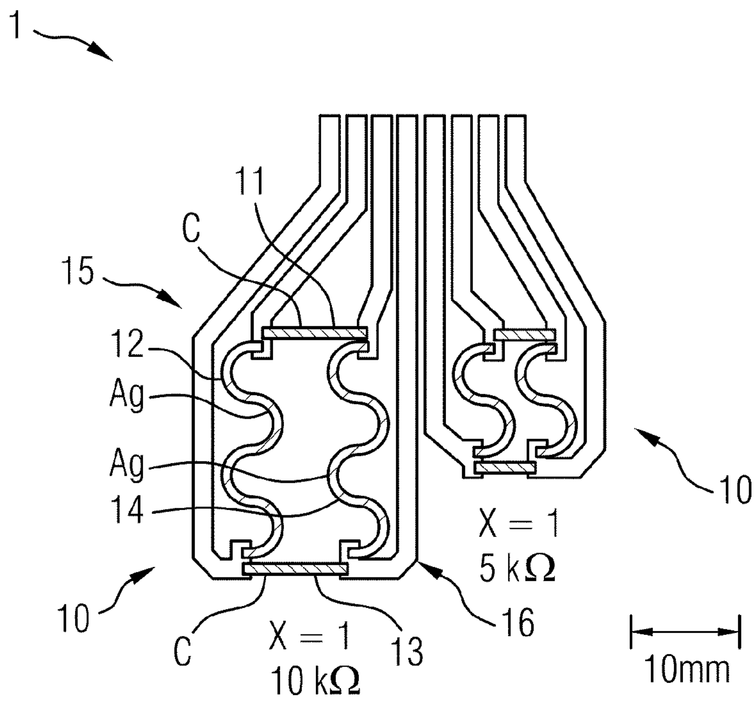
1
11
C
15
12
Ag
Ag
14
10
C
X = 1
10 kΩ
13
16
X = 1
5 kΩ
10
10mm

FIG 12

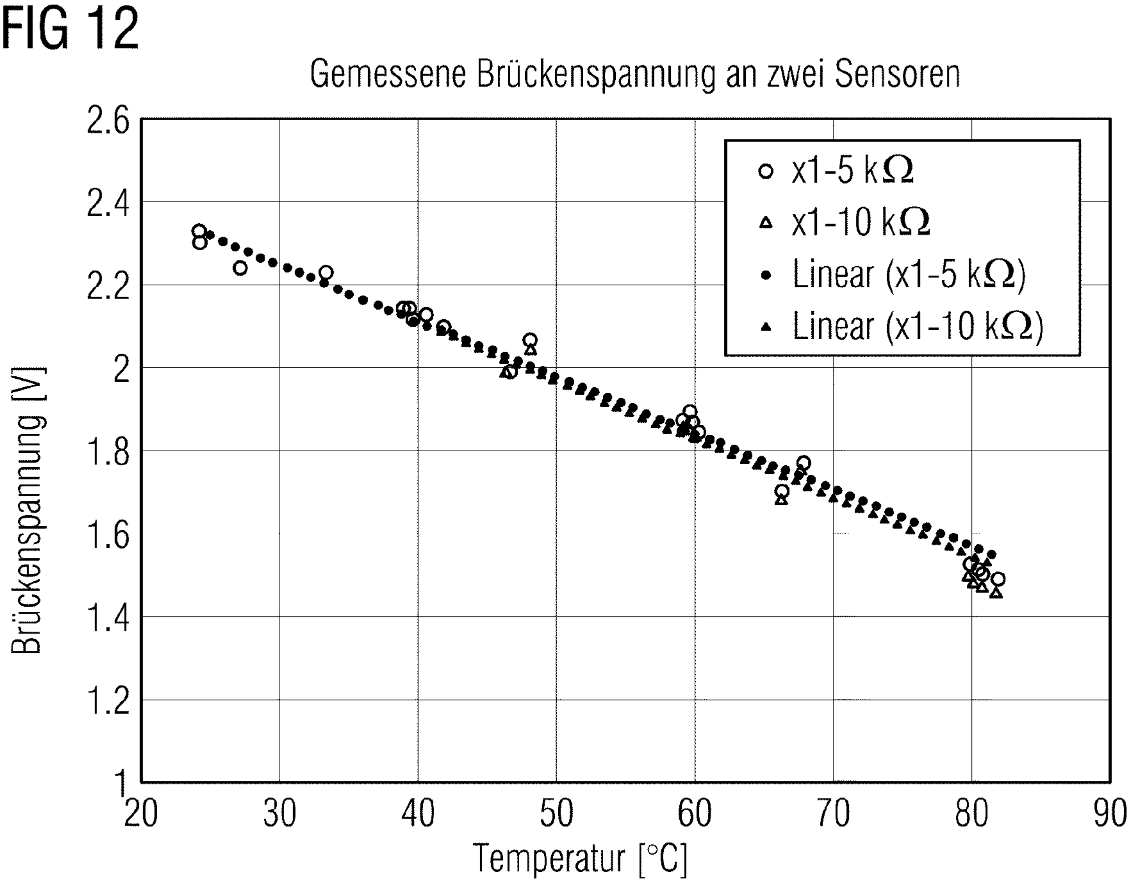
Gemessene Brückenspannung an zwei Sensoren
Brückenspannung [V]
Temperatur [°C]
x1-5 kΩ
x1-10 kΩ
Linear (x1-5 kΩ)
Linear (x1-10 kΩ)
2.6
2.4
2.2
2
1.8
1.6
1.4
1.2
1
20
30
40
50
60
70
80
90

Europäisches Patentamt
European Patent Office
Office européen des brevets

# EUROPÄISCHER RECHERCHENBERICHT

Nummer der Anmeldung
EP 25 21 0118

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2014/376595 A1 (DALEY DOUGLAS M [GB] ET AL) 25. Dezember 2014 (2014-12-25)<br>* Zusammenfassung; Abbildungen 2,5,6 *<br>* Absätze [0024], [0027], [0028], [0034], [0036] *<br>----- | 1-9 | INV.<br>G01K7/20<br>G01K7/24 |
| A | US 2016/282196 A1 (ALIANE ABDELKADER [FR]) 29. September 2016 (2016-09-29)<br>* Zusammenfassung; Abbildungen 8,9 *<br>* Absätze [0060] - [0068], [0082] *<br>----- | 1,5-8 | |
| A | US 10 222 231 B2 (NOKIA TECHNOLOGIES OY [FI]) 5. März 2019 (2019-03-05)<br>* Zusammenfassung; Abbildung 2 *<br>* Spalte 1, Zeilen 11-20 *<br>* Spalte 4, Zeile 63 - Spalte 5, Zeile 34 *<br>----- | 1,9 | |
| | | | RECHERCHIERTE SACHGEBIETE (IPC) |
| | | | G01K |

Der vorliegende Recherchenbericht wurde für alle Patentansprüche erstellt

1

| Recherchenort | Abschlußdatum der Recherche | Prüfer |
|---|---|---|
| Den Haag | 13. Februar 2026 | de Bakker, Michiel |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 25 21 0118

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-02-2026

| Im Recherchenbericht angeführtes Patentdokument | Datum der Veröffentlichung | Mitglied(er) der Patentfamilie | Datum der Veröffentlichung |
|---|---|---|---|
| US 2014376595 A1 | 25-12-2014 | KEINE | |
| US 2016282196 A1 | 29-09-2016 | EP 3073496 A1 | 28-09-2016 |
| | | FR 3034248 A1 | 30-09-2016 |
| | | US 2016282196 A1 | 29-09-2016 |
| US 10222231 B2 | 05-03-2019 | CN 107076569 A | 18-08-2017 |
| | | EP 3018451 A1 | 11-05-2016 |
| | | ES 2640753 T3 | 06-11-2017 |
| | | JP 6446545 B2 | 26-12-2018 |
| | | JP 2017535770 A | 30-11-2017 |
| | | PL 3018451 T3 | 29-12-2017 |
| | | US 2017307405 A1 | 26-10-2017 |
| | | WO 2016071560 A1 | 12-05-2016 |

EPO FORM P0461

Für nähere Einzelheiten zu diesem Anhang : siehe Amtsblatt des Europäischen Patentamts, Nr.12/82